# EUROPÄISCHE PATENTANMELDUNG

(11) **EP 1 811 107 A2**
(43) Veröffentlichungstag der Anmeldung: **25.07.2007**
(21) Anmeldenummer: 07000843.8
(22) Anmeldetag: 17.01.2007
(51) Int. Cl.: E05B 53/00, E05B 65/32, F16H 55/36

(54) **Antreibseinheit für ein Kraftfahrzeugtürschloss**

(30) Priorität: 19.01.2006 DE 10602872
(71) Anmelder: Kiekert Aktiengesellschaft, 42579 Heiligenhaus (DE)
(72) Erfinder: Hanisch, Dirk, 50825 Köln (DE)

(57) **Zusammenfassung**

Gegenstand der vorliegenden Erfindung ist eine Antriebseinheit für kleine Verstellbewegungen mit hoher Kraft in z. B. Kraftfahrzeugen, insbesondere für eine Zuzieh- und/oder Öffnungshilfe für ein zugehöriges Gesperre (2, 3) eines Kraftfahrzeugtürschlosses (1). Diese verfügt in ihrem grundsätzlichen Aufbau über ein flexibles Antriebsmittel (4) sowie wenigstens eine Vorratsrolle (5) für das Antriebsmittel (4). Erfindungsgemäß arbeitet das Antriebsmittel (4) im Sinne einer Linearverstellung auf eine Zugrolle (9).

## Beschreibung

Die Erfindung betrifft eine Antriebseinheit für kleine Verstellbewegungen mit hoher Kraft in Kraftfahrzeugen, insbesondere für eine Zuzieh- und/oder Öffnungshilfe für ein zugehöriges Gesperre eine Kraftfahrzeugtürschlosses, mit einem flexiblen Antriebsmittel sowie wenigstens einer Vorratsrolle für das Antriebsmittel.

Derartige Antriebseinheiten sind in vielfältiger Ausgestaltung bekannt. Verwiesen wird nur beispielhaft auf die DE 100 64 914 B4, welche an dieser Stelle eine Zuziehhilfe beschreibt, die vom Kraftfahrzeugtürschloss baulich getrennt ist. Das flexible Antriebsmittel wird mit Hilfe wenigstens einer Umlenkrolle in seiner Richtung verändert, wobei die Umlenkrolle aus ihrer Normalstellung unter Verkürzung des Weges des Antriebselementes in eine Notöffnungsstellung bewegbar ist. Zu diesem Zweck ist die Umlenkrolle an einem Kniehebel angeordnet, der durch Betätigen einer Notöffnungseinrichtung einknickt. Folglich vollzieht die Umlenkrolle eine mehr oder minder komplizierte Bewegung. Im Übrigen ist das flexible Antriebsmittel direkt an einen Mitnehmerhebel angeschlossen, welcher mit seiner Hilfe gegen die Last einer Vorspannfeder betätigt wird.

Darüber hinaus beschreibt die EP 1 536 090 A2 ein Kraftfahrzeugtürschloss, welches über ein flexibles Zugmittel verfügt, das seinerseits einen Motor zum Öffnen der Sperrklinke mit der Sperrklinke unmittelbar oder mittelbar verbindet. Das flexible Zugmittel wird vom Motor zum Öffnen der Sperrklinke aufgewickelt.

Die bekannten Vorgehensweisen im Stand der Technik sind mit dem generellen Nachteil behaftet, dass sie eine spezielle Anpassung an das zugehörige Kraftfahrzeugtürschloss erfordern. Auch ist die Geräuschentwicklung verbesserungsfähig.

Der Erfindung liegt das technische Problem zugrunde, eine Antriebseinheit der eingangs beschriebenen Ausgestaltung so weiter zu entwickeln, dass diese universell einsetzbar ist und Vorteile hinsichtlich der Geräuschentwicklung aufweist.

Zur Lösung dieser technischen Problemstellung ist eine gattungsgemäße Antriebseinheit für ein Kraftfahrzeugtürschloss im Rahmen der Erfindung dadurch gekennzeichnet, dass das Antriebsmittel im Sinne einer Linearverstellung auf eine Zugrolle arbeitet. Das heißt, das Antriebsmittel arbeitet auf die betreffende Zugrolle so, dass diese (die Zugrolle) eine Linearverstellung erfährt. Dadurch kann die Zugrolle mit einem Linearstellelement zusammenwirken oder selbst ein solches darstellen. Auf diese Weise ist die erfindungsgemäße Antriebseinheit in der Lage, übliche und eine Linearverstellung bewirkende Antriebseinheiten zu ersetzen.

Im Detail sind die Zugrolle und die Vorratsrolle durch das schlaufenförmig um die Zugrolle geführte Antriebsmittel abstandsvariabel miteinander mechanisch gekoppelt. Selbstverständlich kann das Antriebsmittel auch in mehreren Schlaufen von der Vorratsrolle um die Zugrolle und zurück geführt werden. In jedem Fall wird erreicht, dass beim Aufwickeln des Antriebsmittels auf die Vorratsrolle der Abstand zwischen Zugrolle und Vorratsrolle verringert wird, während das Abwickeln des Antriebsmittels von der Vorratsrolle zu einer Abstandsvergrößerung zwischen Zugrolle und Vorratsrolle korrespondiert. Da die Zugrolle bei diesem Vorgang Linearbewegungen ausführt, kann sie insgesamt als Linearstellelement ausgeführt werden oder Bestandteil eines solchen sein.

Es hat sich bewährt, wenn die Zugrolle in dem betreffenden Linearstellelement drehbar gelagert ist, also Bestandteil eines solchen Linearstellelementes ist. Das Linearstellelement verfügt seinerseits über wenigstens ein Übertragungselement, welches die mechanische Verbindung beispielsweise zum Kraftfahr zeugtürschloss respektive zu seinem Gesperre bei Realisierung einer Zuzieh- und/oder Öffnungshilfe herstellt. Bei diesem Übertragungselement mag es sich um einen Bowdenzug, eine Verbindungsstange etc. handeln.

Um die Linearbewegung der in dem Linearstellelement gelagerten Zugrolle sicher zu stellen, ist das Linearstellelement in einem Antriebsgehäuse gelagert, und zwar in zugehörigen und dort vorgesehenen Führungen, insbesondere Linearführungen. Auf diese Weise wird sichergestellt, dass die Zugrolle im Sinne der Linearverstellung durch Auf- und Abwickelvorgänge des Antriebsmittels in Bezug auf die Vorratsrolle bewegt wird.

Es hat sich bewährt, wenn die Vorratsrolle und die Zugrolle in dem vorerwähnten gemeinsamen Antriebsgehäuse gelagert sind. Auf diese Weise können die Vorratsrolle und die Zugrolle ein Getriebe für das Antriebsmittel bilden. Tatsächlich führt nämlich die schlaufenförmige Führung des Antriebsmittels über die Zugrolle dazu, dass zugehörige und von einem motorischen Antrieb auf die Vorratsrolle übertragene Kräfte im Beispielfall verdoppelt werden. Das heißt, die Erfindung macht sich auch das bekannte Flaschenzugprinzip mit einer losen Rolle in Gestalt der Zugrolle zu Nutze.

Die Vorratsrolle ist in der Regel als Auf- und Abwickelrolle für das flexible Antriebsmittel ausgebildet. In diesem Zusammenhang verfügt sie über einen unterschiedlichen Auf- und Abwickelradius. Üblicherweise ist der Aufwickelradius größer als der Abwickelradius gewählt, damit beim Aufwickeln ein größeres Drehmoment an dem flexiblen Zugmittel zur Verfügung steht. Zu diesem Vorgang korrespondiert die sich verkürzende Seilschlaufe zwischen Vorratsrolle und Zugrolle und demzufolge eine lineare Zugkraft, die beispielhaft für die beschriebenen Stellbewegungen zur Steuerung eines Kraftfahrzeugtürschlosses eingesetzt werden kann. Diese Stellbewegungen erfordern insbesondere zu Anfang beim Zuziehen oder Öffnen eines Gesperres besonders hohe Kräfte, dem die Erfindung durch den beschriebenen vergrößerten Aufwickelradius Rechnung trägt. Die Differenz zwischen Aufwickel- und Abwickelradius stellt sicher, dass die Zugrolle gehoben und gesenkt wird. Bei einer Umdrehung der Vorratsrolle wird die Seilschlaufe zwischen Vorratsrolle und Zugrolle um den Betrag ΔR • 2π : 2, das heißt den Umfang aus der Radiusdifferenz geteilt durch zwei gekürzt.

Dagegen sind die rückwärts gerichteten Stellbewegungen meist mit geringerer Kraft zu bewerkstelligen bzw. werden in der Regel durch eine Feder unterstützt. Beispielsweise beim Zuziehen des Gesperres kann eine Rückstellfeder dafür sorgen, dass das Gesperre in Gegenrichtung beaufschlagt wird. Folgerichtig kann in dieser Stellrichtung (sich verlängernde Schlaufe zwischen Zugrolle und Vorratsrolle) mit einem geringeren Abwickelradius der Vorratsrolle gearbeitet werden.

Bei dem bereits angesprochenen motorischen Antrieb für die Vorratsrolle handelt es sich im Allgemeinen um einen Elektromotor, insbesondere bürstenlosen Elektromotor, welcher besonders wartungsarm gestaltet ist. Außerdem hat es sich bewährt, an dieser Stelle einen Elektromotor mit geringer Drehzahl und hohem Drehmoment einzusetzen. Ebenso empfiehlt sich ein Elektromotor in flacher Bauweise, dessen Länge sehr viel kleiner als der Durchmesser ist. Dadurch wird eine besonders kompakte Ausgestaltung der gesamten Antriebseinheit zur Verfügung gestellt.

In diesem Zusammenhang kann die Antriebseinheit z. B. als vom Kraftfahrzeugtürschloss unabhängiges Antriebsmodul mit eigenem Antriebsgehäuse ausgeführt sein. Es ist alternativ aber auch möglich, die Antriebseinheit in den Kraftfahrzeugtürverschluss zu integrieren. Dann stimmt das Antriebsgehäuse mit dem Gehäuse für das Kraftfahrzeugtürschloss überein oder ist teilweise Bestandteil des betreffenden Gehäuses.

Im Ergebnis wird eine Antriebseinheit für kleine Verstellbewegungen mit Hoher Kraft in Kraftfahrzeugen, insbesondere für ein Kraftfahrzeugtürschloss zur Verfügung gestellt, die sich universell zur Realisierung linearer Stellbewegungen einsetzen lässt. Durch die Ausgestaltung der Vorratsrolle mit gegenüber dem Abwickelradius vergrößerten Aufwickelradius und insbesondere die Zugrolle und die dadurch erreichte Getriebewirkung von Vorratsrolle und Zugrolle wird eine hohe Linearkraft mit geringem Eingangsdrehmoment zur Verfügung gestellt. Weil die Zugrolle und die Vorratsrolle in jeden beliebigen Abstand zueinander gebracht werden können, liegt darüber hinaus eine lineare und wegabhängige Übersetzung vor. Das heißt, es lassen sich unterschiedliche lineare Stellwege mit ein und demselben Getriebe realisieren. Dabei wird insgesamt ein hoher Wirkungsgrad des Getriebes aus Vorratsrolle und Zugrolle erreicht.

Der Rückgriff auf ein flexibles Antriebsmittel gewährleistet darüber hinaus eine besonders geringe Geräuschentwicklung. Das gilt insbesondere, wenn man die erfindungsgemäße Antriebseinheit mit einem Zahnradgetriebe vergleicht. Denn die dort unvermeintlichen Zahneingriffsgeräusche entfallen. Hierin sind die wesentlichen Vorteile zu sehen. Die Antriebseinheit ist außer für Kraftfahrzeugtürschlösser beispielsweise auch für Kleinstantriebe, Lehnenverstellungen etc. einsetzbar.

Im Folgenden wird die Erfindung anhand einer lediglich ein Ausführungsbeispiel darstellenden Zeichnung näher erläutert; es zeigen:

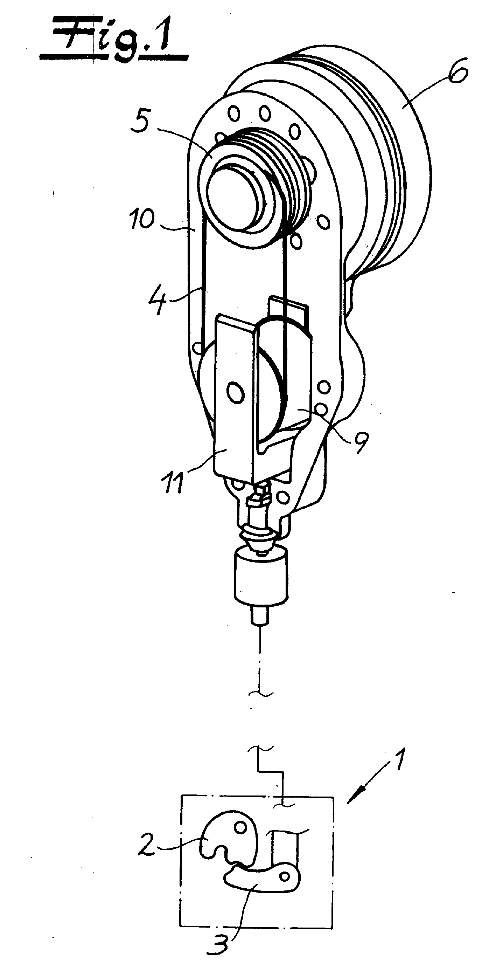

- **Fig. 1**: die erfindungsgemäße Antriebseinheit perspektivisch,
- **Fig. 2**: eine Seitenansicht der Fig. 1 und
- **Fig. 3**: eine schematische Darstellung der Antriebseinheit.

In den Figuren ist eine Antriebseinheit für ein nicht näher spezifiziertes Kraftfahrzeugtürschloss 1 gezeigt. Im Rahmen der Darstellung und nicht einschränkend ist die Antriebseinheit als vom Kraftfahrzeugtürschloss 1 unabhängiges Antriebsmodul ausgeführt. Mit Hilfe der Antriebseinheit lässt sich ein Gesperre 2, 3 im Kraftfahrzeugtürschloss 1 (elektrisch) öffnen. Dazu arbeitet die Antriebseinheit auf eine Sperrklinke 3 des Gesperres 2, 3 und hebt diese aus, so dass die Drehfalle 2 federunterstützt ihre Stellung "offen" erreicht. Bei diesem Anwendungsfall handelt es sich ausdrücklich um ein Beispiel, welches nicht einschränkend zu betrachten ist.

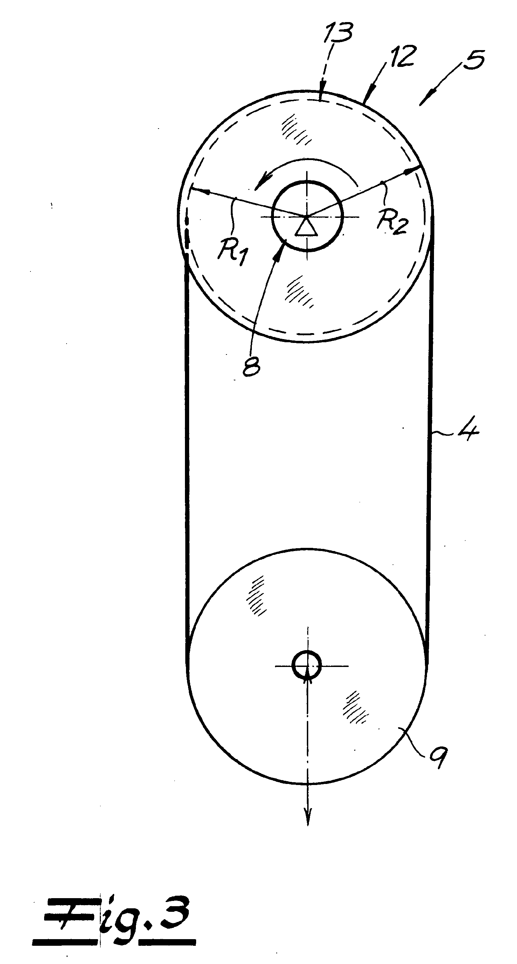

Die Antriebseinheit verfügt über ein flexibles Antriebsmittel 4, bei dem es sich im Ausführungsbeispiel um ein Seil 4 aus Draht, Kunststoff etc. handelt. Grundsätzlich kann als Antriebsmittel 4 auch ein Band aus Kunststoff, eine Kette etc. eingesetzt werden. Das ist jedoch nicht dargestellt. Das flexible Antriebsmittel 4 wird auf einer Vorratsrolle 5 bevorratet, auf welcher das Antriebsmittel 4 auf- und abgewickelt wird. Um dies zu erreichen, ist die Vorratsrolle 5 an einen Motor, insbesondere Elektromotor 6 angeflanscht. Tatsächlich greift der Elektromotor 6 direkt mit seiner Antriebswelle 7 in eine zugehörige Lageröffnung 8 der Vorratsrolle 5 ein, wie die Fig. 3 deutlich macht.

Zusätzlich zu der Vorratsrolle 5 ist eine Zugrolle 9 vorgesehen. Man erkennt, dass die Vorratsrolle 5 und die Zugrolle 9 ein Getriebe für das Antriebsmittel 4 bilden, vorliegend ein Seilzuggetriebe. Denn die Zugrolle 9 ist abstandsveränderlich gegenüber der Vorratsrolle 5 ausgebildet und wird hierzu in einem zugehörigen und nur teilweise angedeuteten Antriebsgehäuse 10 geführt. Bei der Zugrolle 9 handelt es sich nämlich um eine lose Rolle, welche in Verbindung mit der Vorratsrolle 9 einen Flaschenzug mit loser Rolle darstellt. Dadurch kann die Kraft des Antriebsmittels 4 in bekannter Art und Weise verdoppelt werden.

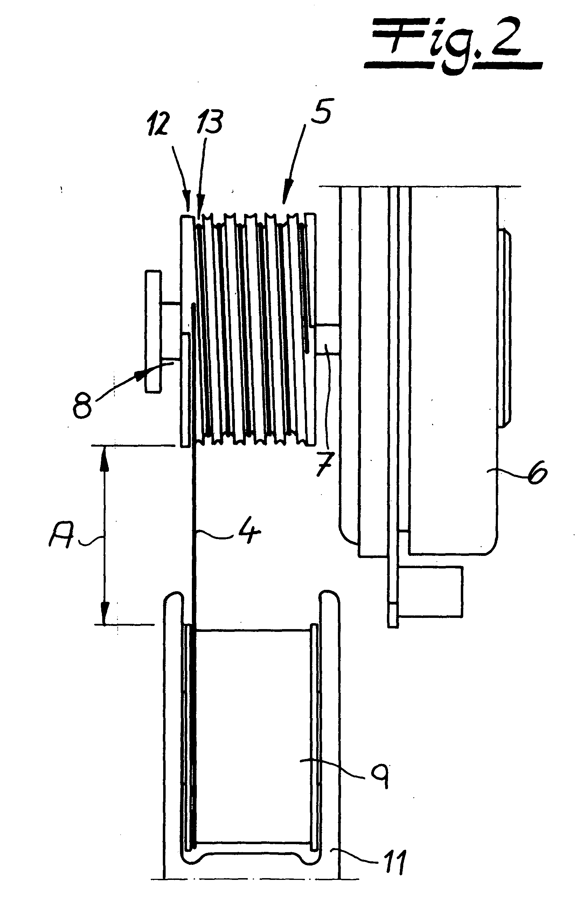

Das Antriebsmittel 4 ist schlaufenförmig um die Zugrolle 9 geführt, wobei im Rahmen des Ausführungsbeispiels und nicht einschränkend eine Schlaufe realisiert ist. Durch diese mechanische Kopplung zwischen der Vorratsrolle 5 und der Zugrolle 9 lässt sich ein Abstand A zwischen der Zugrolle 9 und Vorratsrolle 5 verändern, wie die Fig. 2 deutlich macht. Tatsächlich arbeitet das Antriebsmittel 4 auf die Zugrolle 9 im Sinne dessen Linearverstellung, wobei auf diese Weise der Abstand A zwischen der Zugrolle 9 und der Vorratsrolle 5 geändert wird.

Um dies im Detail zu erreichen, ist die Zugrolle 9 in einem Linearstellelement 11 drehbar gelagert. Bei dem Linearstellelement 11 handelt es sich im Ausführungsbeispiel um eine U-förmige Aufnahme 11, welche in zugehörigen und nicht dargestellten Linearführungen des Antriebsgehäuses 10 gelagert und entsprechend linear geführt wird. Tatsächlich vollzieht die Zugrolle 9 und mit ihr das Linearstellelement 11 Bewegungen in der Zeichenebene in Fig. 2, dargestellt durch den zum veränderlichen Abstand A korrespondierenden Doppelpfeil.

Anhand der Fig. 3 erkennt man, dass die Vorratsrolle 5 als Auf- und Abwickelrolle für das Antriebsmittel 4 ausgebildet ist. Tatsächlich verfügt die Vorratsrolle 5 über unterschiedliche Auf- und Abwickelradien, die mit R₁ für den Abwickelradius und R₂ für den Aufwickelradius angegeben sind. Der Aufwickelradius R₂ ist größer als der Abwickelradius R₁ gewählt, das heißt es gilt, R₂ > R₁. Um dies im Detail zu erreichen, sind unterschiedliche Windungsgänge 12, 13 einerseits als Aufwickelwindungsgang 12 und andererseits als Abwickelwindungsgang 13 auf der Vorratsrolle 5 realisiert. Die Radiusdifferenz ΔR = R₂ - R₁ stellt sicher, dass die Zugrolle 9 gehoben und gesenkt wird. Bei einer Umdrehung der Vorratsrolle 5 wird die Seilschlaufe zwischen Vorratsrolle 5 und Zugrolle 9 um den Betrag ΔR • 2π : 2, das hei9t den Umfang bezogen auf die Radiusdifferenz geteilt durch zwei, gekürzt.

Die dargestellte Antriebseinheit ist vorliegend unabhängig vom Kraftfahrzeugtürschloss 1 ausgestaltet und verfügt über das eigene Antriebsgehäuse 10. Grundsätzlich kann die Antriebseinheit aber auch in das Kraftfahrzeugtürschloss 1 integriert werden. Das ist jedoch nicht gezeigt.

## Patentansprüche

1. Antriebseinheit, insbesondere für eine Zuzieh- und/oder Öffnungshilfe für ein zugehöriges Gesperre (2, 3) eines Kraftfarzeugtürschlosses, mit einem flexiblen Antriebsmittel (4) sowie wenigstens einer Vorratsrolle (5) für das Antriebsmittel (4), **dadurch gekennzeichnet, dass** das Antriebsmittel (4) im Sinne einer Linearverstellung auf eine Zugrolle (9) arbeitet.

2. Antriebseinheit nach Anspruch 1, **dadurch gekennzeichnet, dass** die Zugrolle (9) und die Vorratsrolle (5) durch das schlaufenförmig um die Zugrolle (9) geführte Antriebsmittel (4) abstandsvariabel miteinander mechanisch gekoppelt sind.

3. Antriebseinheit nach Anspruch 1 oder 2, **dadurch gekennzeichnet, dass** die Zugrolle (9) in einem Linearstellelement (11) drehbar gelagert ist, welches seinerseits wenigstens ein Übertragungselement (14) aufweist.

4. Antriebseinheit nach einem der Ansprüche 1 bis 3, **dadurch gekennzeichnet, dass** das Linearstellelement (11) in einem Antriebsgehäuse (10) und dortigen Führungen verstellbar gelagert ist.

5. Antriebseinheit nach einem der Ansprüche 1 bis 4, **dadurch gekennzeichnet, dass** die Vorratsrolle (5) als Auf- und Abwickelrolle für das Antriebsmittel (4) mit unterschiedlichem Aufwickelradius (R₂) und Abwickelradius (R₁) ausgebildet ist.

6. Antriebseinheit nach Anspruch 5, **dadurch gekennzeichnet, dass** der Aufwickelradius (R₂) größer als der Abwickelradius (R₁) gewählt ist.

7. Antriebseinheit nach einem der Ansprüche 1 bis 6, **dadurch gekennzeichnet, dass** ein motorischer Antrieb (6), insbesondere bürstenloser Elektromotor (6), an die Vorratsrolle (5) angeschlossen ist.

8. Antriebseinheit nach einem der Ansprüche 1 bis 7, **dadurch gekennzeichnet, dass** die Vorratsrolle (5) unterschiedliche Windungsgänge (12, 13) für einerseits das Abwickeln und andererseits der Abwickeln aufweist.

9. Antriebseinheit nach einem der Ansprüche 1 bis 8, **dadurch gekennzeichnet, dass** die Vorratsrolle (5) und die Zugrolle (9) in dem gemeinsamen Antriebsgehäuse (10) gelagert sind und ein Getriebe für das Antriebsmittel (4) bilden.

10. Antriebseinheit nach einem der Ansprüche 1 bis 9, **dadurch gekennzeichnet, dass** sie als unabhängiges, z. B. vom Kraftfahrzeugtürschloss (1) unabhängiges Antriebsmodul ausgebildet ist oder in das Kraftfahrzeugtürschloss (1) integriert ist.
